(19) Europäisches Patentamt
European Patent Office
Office européen des brevets

(11) **EP 3 340 416 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(51) Int Cl.:
*H02J 3/32* *(2006.01)*    *H02J 3/38* *(2006.01)*

(21) Anmeldenummer: **16205306.0**

(22) Anmeldetag: **20.12.2016**

(54) **STEUEREINHEIT**

CONTROL UNIT

UNITÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.06.2018 Patentblatt 2018/26**

(73) Patentinhaber: **Siemens Aktiengesellschaft 80333 München (DE)**

(72) Erfinder:
• **Bamberger, Joachim**
  **80999 München (DE)**
• **Szabo, Andrei**
  **85521 Ottobrunn (DE)**

(56) Entgegenhaltungen:
**EP-A2- 1 511 109    WO-A1-2015/139061**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Steuereinheit für eine Energieversorgungseinrichtung nach dem Oberbegriff von Patentanspruch 1, eine Energieversorgungseinrichtung und ein Verfahren für eine Energieversorgungseinrichtung nach dem Oberbegriff von Patentanspruch 15.

Hybride elektrische Kraftwerke kombinieren erneuerbare Energieerzeugung mit nichterneuerbarer respektive konventioneller Energieerzeugung und deren Speicherung. Diese Energieversorgungseinrichtungen müssen verschiedenen Vorschriften genügen, insbesondere wenn sie in Energieverteilnetzen, Stromnetzen bzw. Grids eingebunden sind. Ziel ist, eine stabile Energie bzw. Stromversorgung zur Verfügung zu stellen, sowohl in großen Energieverteilnetzen als auch in Inselnetzen.

Bei der erneuerbaren Energieerzeugung durch Energieumwandlungseinrichtungen, z.B. durch Photovoltaikanlagen, die Sonnenenergie in elektrische Energie umwandeln, oder Windenergieanlagen, die Windenergie in elektrische Energie umwandeln, unterliegt die umgewandelte bzw. erzeugte elektrische Energie gewissen Schwankungen, da die erneuerbaren Energien nicht zeitlich gleichbleibend zur Verfügung stehen. Die elektrische Ausgangsleistung einer Energieumwandlungseinrichtung für erneuerbare Energien variiert je nach Wetterlage, z.B. Sonnenscheindauer bzw. Bewölkung bei Photovoltaikanlagen oder Windgeschwindigkeit bei Windkraftanlagen.

Um dies zu kompensieren sind in genannten Energieversorgungseinrichtungen beispielsweise Batteriespeicher bzw. Batterieenergiespeichersysteme, so genannte Battery Energy Storage Systems, kurz BESS, vorgesehen.

Diese sind mittels einer Verbindungseinheit mit den Energieumwandlungseinrichtungen verbunden, beispielsweise insbesondere mit Energieumwandlungseinrichtungen für erneuerbare Energien. Diese Verbindungseinheit führt die zugeführten elektrischen Energien zusammen und gibt diese als Summenenergie an ihrem Ausgang ab. Dabei kann die Summenenergie auch nur eine zugeführte Energie einer Energieumwandlungseinrichtung aufweisen.

Die Batteriespeicher transformieren die in der Zelle gespeicherte chemische Energie in Gleichstromenergie, die dann durch Wechselrichter in Wechselstromenergie umgewandelt, gegebenenfalls durch Transformatoren transformiert, und abgegeben wird.

Die Batteriespeicher weisen mindestens eine Batterieeinheit auf, üblicherweise mehrere Batterieeinheiten, die zur Energiespeicherung dienen. Die Batteriespeicher weisen eigene Steuerungen zur Verwaltung, zur Energieabgabe, zum Laden oder/und zur Energiespeicherung auf. Diese Steuerungen bzw. die Batteriespeicher benötigen folglich selbst Energie, um ihre eigene Funktion sicher zu stellen bzw. haben Verluste. Dieser Eigenenergiebedarf ist nicht unbeträchtlich.

Diese Batteriespeicher stehen ferner nicht unmittelbar zur Verfügung, sondern weisen eine Anlaufzeit auf, die beispielsweise im Bereich von Sekunden bis zu einer Minute bzw. einigen Minuten liegen kann.

Deshalb laufen typischerweise die Batteriespeicher kontinuierlich. Sie haben somit eine kontinuierliche Leistungsaufnahme. Diese Leistungsaufnahme bzw. Verlustleistung kann signifikant sein und die Leistungsbilanz der Energieversorgungseinrichtung negativ beeinflussen.

Die Druckschrift WO 2015/139061 A1 beschreibt eine Stromerzeugungseinheit mithilfe wenigstens einer Photovoltaikanlage. Dazu werden einer Steuereinheit Daten betreffend eine gemessene Beleuchtungsstärke sowie Daten betreffend eine vorhergesagte Beleuchtungsstärke einer Steuereinheit zugeführt. Basierend auf diesen Daten erzeugt die Steuereinheit so genannte "Ramp-Events". Diese "Ramp-Events" werden in zwei verschiedene Arten aufgeteilt. Bei einem "Ramp-Down-Event" wird die Batterie zuvor geladen, bei einem "Ramp-Up-Event wird die Batterie zuvor entladen. Das Ramp-Down-Event zeigt an, dass die Stromerzeugung durch die Photovoltaikanlage abnimmt bzw. abnehmen wird.

Die Druckschrift EP 1 511 109 A2 beschreibt ein Stromerzeugungssystem mithilfe einer Brennstoffzelle und ein dazugehöriges Steuerungsverfahren. Dieses Stromerzeugungssystem weist eine Energiemesseinheit auf, um einen aktuellen Energieverbrauchswert in einem Haushalt zu ermitteln. Darüber hinaus weist dieses System eine Vorhersageeinheit auf, um einen Energieverbrauch in der Zukunft zu ermitteln. Zudem wird ein aktueller Energieverbrauch gemessen. Diese Druckschrift sieht eine Steuereinheit vor, welche die Brennstoffzelle ansteuern kann. Dabei kann beispielsweise die Brennstoffzelle gemäß einem Schätzwert bezüglich des Energieverbrauchswerts aktiviert werden. In diesem Zusammenhang sollte auch Dokument WO 2015/139061 A1 erwähnt werden, das ebenfalls eine ähnliche Steuereinheit zeigt.

Aufgabe der vorliegenden Erfindung ist es, eine Energieversorgungseinrichtung der eingangs genannten Art zu verbessern, insbesondere die Energiebilanz zu verbessern.

Diese Aufgabe wird durch eine Steuereinheit für eine Energieversorgungseinrichtung mit den Merkmalen des Patentanspruchs 1 gelöst, ferner durch eine Energieversorgungseinrichtung gemäß Patentanspruch 11 und ein Verfahren mit den Merkmalen des Patentanspruchs 12.

Erfindungsgemäß ist eine Steuereinheit vorgesehen. Die Steuereinheit ist für eine Energieversorgungseinrichtung geeignet, wobei die Energieversorgungseinrichtung aufweist:

-   einen Batteriespeicher mit mindestens einer Batterieeinheit, die eine Anlaufzeit, d.h. eine Zeit vom Einschalten des Batteriespeichers bzw. der Batterieeinheit bis zur Verfügungsstellung von elektrischer Energie - die beispielsweise im Bereich von wenigen Sekunden bis zu einer bzw. mehreren Minuten betragen kann, und eine Batterieleistung aufweist,
- eine erste Energieumwandlungseinrichtung, die nichtelektrische Energie in elektrische Energie umwandelt,
- eine Verbindungseinheit, die mit dem Batteriespeicher und der ersten Energieumwandlungseinrichtung verbunden ist und die derart ausgestaltet ist, dass eine Summenenergie der elektrischen Energie der Energieumwandlungseinrichtung und des Batteriespeichers an ihrem Ausgang abgebbar ist.

Der Steuereinheit wird erfindungsgemäß eine momentane Ausgangsleistung der ersten Energieumwandlungseinrichtung oder ein zukünftiger Ausgangsleistungsbedarf, insbesondere der Energieversorgungseinrichtung oder der ersten Energieumwandlungseinrichtung, zugeführt.

Der Steuereinheit wird erfindungsgemäß ferner eine Vorhersageleistung der ersten Energieumwandlungseinrichtung für mindestens einen zukünftigen Zeitpunkt zugeführt.

Die Steuereinheit, die beispielsweise einen Mikroprozessor aufweist, ist derart ausgestaltet, dass einerseits mittels der momentanen Ausgangsleistung oder dem zukünftigen Ausgangsleistungsbedarf und anderseits mittels der Vorhersageleistung eine benötigte Leistung zum zukünftigen Zeitpunkt ermittelt wird. Die benötigte Leistung wird mit einem ersten Schwellwert verglichen und bei dessen Überschreitung mindestens eine Batterieeinheit eingeschaltet. Bei mehreren Batterieeinheiten wird die notwendige Anzahl an Batterieeinheiten eingeschaltet, um die benötigte Leistung zur Verfügung zu stellen. Der erste Schwellwert kann beispielsweise der Wert Null sein, so dass bei positiven benötigten Leistungen eine Batterieeinheit bzw. ein Batteriespeicher zugeschaltet wird. Der erste Schwellwert kann auch im positiven Bereich liegen, wenn kleine Unterschreitungen des Leistungsbedarfs hinnehmbar sind bzw. kurzfristige Schwankungen tolerierbar sind bzw. ausgeglichen werden sollen.

Der erste Schwellwert kann auch im negativen Bereich liegen, wenn eine Leistungsreserve der ersten Energieumwandlungseinrichtung ein kritisches Maß unterschreitet, um genügend temporäre Energie durch den Batteriespeicher /-einheit zur Verfügung zu stellen.

Ferner können bei genügender Energie der Energieumwandlungseinrichtung, d.h. wenn der erste Schwellwert unterschritten wird bzw. ein zweiter Schwellwert unterschritten wird, mindestens eine Batterieeinheit abgeschaltet werden.

Dies hat den besonderen Vorteil, dass nur dann Batteriespeicher bzw. Batterieeinheiten mit Leistungsbedarf zugeschaltet sind, wenn auch wirklich Energie aus diesen benötigt wird. Andernfalls sind diese abgeschaltet. Somit wird keine Eigenenergie für die Batteriespeicher verbraucht, was die Energiebilanz verbessert.

Vorteilhafte Ausgestaltungen der Erfindung sind in den Unteransprüchen angegeben.

Die Erfindung sieht vor, dass die Steuereinheit die momentane Ausgangsleistung der ersten Energieumwandlungseinrichtung erhält (keinen zukünftigen Ausgangsleistungsbedarf). Die Steuereinheit ist derart ausgestaltet, dass mittels der momentanen Ausgangsleistung eine berechnete Ausgangsleistung zum zukünftigen Zeitpunkt ermittelt wird. Mittels der berechneten Ausgangsleistung und der Vorhersageleistung wird die benötigte Leistung zum zukünftigen Zeitpunkt ermittelt.

Dies hat den besonderen Vorteil, dass ein optimales Energiemanagement basierend auf der aktuell gemessenen Ausgangsleistung, beispielsweise direkt als Ausgangsgröße der Energieumwandlungseinrichtung, welche der Steuereinheit zugeführt wird, oder durch Messung mittels beispielsweise eines Sensors, ermöglicht wird.

In einer vorteilhaften Ausgestaltung der Erfindung, ist die Steuereinheit derart ausgestaltet, dass die benötigte Leistung die Differenz von berechneter Ausgangsleistung als Minuend und Vorhersageleistung als Subtrahend ist.

Dies hat den besonderen Vorteil, dass eine konkrete Möglichkeit zur Berechnung für das Energiemanagement angegeben ist.

Die Erfindung sieht vor, dass die Steuereinheit derart ausgestaltet ist, dass die berechnete Ausgangsleistung die Differenz der momentanen Ausgangsleistung als Minuend und eines Sicherheitsabschlages als Subtrahend ist. Der Sicherheitsabschlag ist ein Produkt eines Anstieges pro Zeiteinheit, eine so genannte ramp rate, und der Zeitdifferenz von zukünftigem und momentanem Zeitpunkt.

Dies hat den besonderen Vorteil, dass eine einfache Möglichkeit zur Ermittlung der zukünftigen Ausgangsleistung der Energieumwandlungseinrichtung gegeben ist.

In einer vorteilhaften Ausgestaltung der Erfindung, wandelt die erste Energieumwandlungseinrichtung erneuerbare Energie in elektrische Energie um.

Dies hat den besonderen Vorteil, dass die Erfindung hier ihre besonderen Stärken hat, da besonders die Verfügbarkeit von erneuerbare Energien einer starken zeitlichen Schwankung unterliegt, die durch das erfindungsgemäße Energiemanagement mit temporären Zuschalten bzw. Abschalten des Batteriespeichers bzw. der Batterieeinheit verbessert wird.

In einer vorteilhaften Ausgestaltung der Erfindung, ist die erste Energieversorgungseinrichtung mit einer Last verbindbar, die eine Lastleistung mit einer Lastleistungstoleranz aufweist. Die erste Energieumwandlungsrichtung weist eine Nennleistung mindestens gleich oder größer als die Lastleistung auf. Die Steuereinheit erhält als Vorhersageleistung eine Vorhersagelastleistung erhält, die die Lastleistung für mindestens einen zukünftigen Zeitpunkt ist. Die Steuereinheit ist derart ausgestaltet, dass mittels der Nennleistung und der Vorhersagelastleistung die benötigte Leistung zum zukünftigen Zeitpunkt ermittelt wird.

Dies hat den besonderen Vorteil, dass die erfinderische Idee abhängig vom Lastleistungsbedarf genutzt wird, um so das Energiemanagement zu verbessern.

In einer vorteilhaften Ausgestaltung der Erfindung, ist die Steuereinheit derart ausgestaltet, dass die benötigte Leistung die Differenz von Vorhersagelastleistung als Minuend und Nennleistung als Subtrahend ist.

Dies hat den besonderen Vorteil, dass eine einfache konkrete Möglichkeit zur Ermittlung der benötigten Leistung gegeben ist.

In einer vorteilhaften Ausgestaltung der Erfindung, wandelt die erste Energieumwandlungseinrichtung nichterneuerbare Energie in elektrische Energie um.

Dies hat den besonderen Vorteil, dass insbesondere bei der Vorhersagelastleistung eine temporäre Anpassung der Energieversorgung durch Batterieleistung gegeben ist, ohne die konventionelle Leistungserzeugung zu beeinflussen.

In einer vorteilhaften Ausgestaltung der Erfindung, ist bei mehreren Batterieeinheiten des Batteriespeichers die Steuereinheit derart ausgestaltet, dass die Anzahl einzuschaltender Batterieeinheiten durch den ganzzahlig aufgerundeten Quotienten aus benötigter Leistung als Dividend und Batterieleistung der Batterieeinheit als Divisor ermittelt wird.

Dies hat den besonderen Vorteil, dass eine Möglichkeit für ein individuelles Zuschalten von Batterieeinheiten gegeben ist, wodurch die Leistung nicht benötigter Batterieeinheiten reduziert wird, da diese nicht eingeschaltet sind. Somit wird die Energiebilanz verbessert.

In einer vorteilhaften Ausgestaltung der Erfindung, ist der zukünftige Zeitpunkt größer oder gleich der Summe des momentanen Zeitpunktes und der Anlaufzeit.

Dies hat den besonderen Vorteil, dass über die Anlaufzeit hinaus geplant wird, so dass immer eine ausreichende Energieversorgung mit optimaler Energiebilanz zur Verfügung steht.

In einer vorteilhaften Ausgestaltung der Erfindung, ist die Steuereinheit derart ausgestaltet, dass die Einschaltung der mindestens einen Batterieeinheit zum momentanen Zeitpunkt um eine Offsetzeit verzögert wird, wenn der zukünftige Zeitpunkt größer als die Summe des momentanen Zeitpunktes und der Anlaufzeit ist, wobei sich die maximale Offsetzeit insbesondere aus der Differenz von zukünftigen Zeitpunkt als Minuend und Summe aus momentanen Zeitpunkt und Anlaufzeit als Subtrahend ergibt.

Dies hat den besonderen Vorteil, dass eine Batterieeinheit optimalerweise genau zum Zeitpunkt, wo diese benötigt wird, zur Verfügung steht. D.h. die Anlaufzeit der Batterieeinheit endet dann, wenn die Energie der Batterieeinheit benötigt wird. Bzw. eine kurze Zeit vorher. So wird ein optimales Energiemanagement erreicht, unter Vermeidung des Verbrauchs von Energie von nicht benötigten Batterieeinheiten/-speicher.

In einer vorteilhaften Ausgestaltung der Erfindung weist eine Energieversorgungseinrichtung eine erfindungsgemäße Steuereinheit auf.

Dies hat den besonderen Vorteil, dass sich alle Vorteile in einem System realisieren lassen.

In einer vorteilhaften Ausgestaltung der Erfindung ist ein erfindungsgemäßes Verfahren für eine Energieversorgungseinrichtung gegeben.

Dies hat den besonderen Vorteil, dass sich ein entsprechendes Arbeitsverfahren realisieren lässt.

Alle Ausgestaltungen, sowohl in abhängiger Form rückbezogen auf den unabhängigen Patentanspruch, als auch rückbezogen lediglich auf einzelne Merkmale oder Merkmalskombinationen von Patentansprüchen, bewirken eine Verbesserung einer Energieversorgungseinrichtung.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit der Zeichnung näher erläutert werden.

Hierbei zeigt:

Figur 1 eine erste Blockdarstellung einer Energieversorgungseinrichtung

Figur 2 eine zweite Blockdarstellung einer Energieversorgungseinrichtung

Figur 3 ein erstes Diagramm zur Erläuterung der Erfindung

Figur 4 ein zweites Diagramm zur Erläuterung der Erfindung

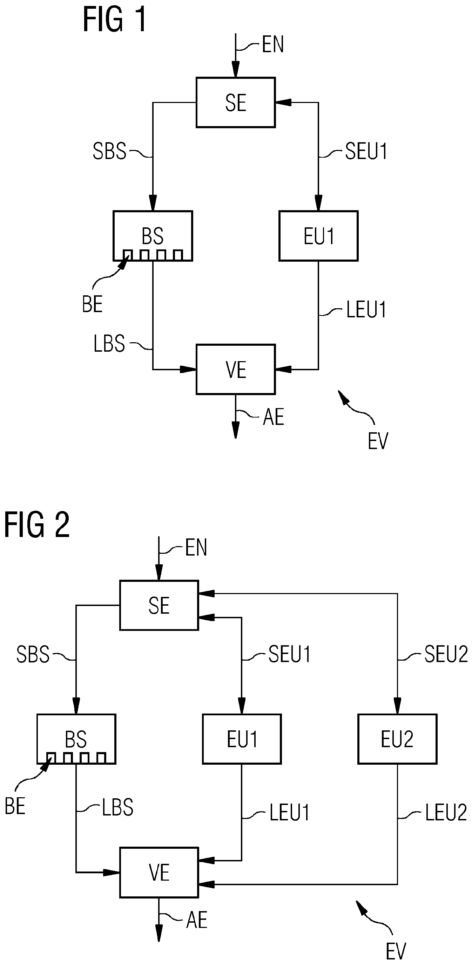

Figur 1 zeigt eine Blockdarstellung einer Energieversorgungseinrichtung EV, aufweisend eine erste Energieumwandlungseinrichtung EU1, die beispielsweise erneuerbare oder nichterneuerbare Energie in elektrische Energie umwandelt; einen Batteriespeicher BS, mit mindestens einer Batterieeinheit BE; eine Verbindungseinheit VE, die mittels einer ersten Energieleitung LEU1 mit der ersten Energieumwandlungseinrichtung EU1 und mittels einer zweiten Energieleitung LBS mit dem Batteriespeicher verbunden ist, und eine Summenenergie der elektrischen Energie der ersten Energieumwandlungseinrichtung und des Batteriespeichers an ihrem Ausgang AE abgibt.

Dabei kann eine der beiden zugeführten Energien gleich null sein, so dass die Summenenergie nur aus einer zugeführten Energie besteht.

Erfindungsgemäß ist eine Steuereinheit SE vorgesehen, die mit der ersten Energieumwandlungseinrichtung EU1 über eine erste Steuerleitung SEU1 verbunden sein kann sowie mit dem Batteriespeicher BS über eine zweite Steuerleitung SBS verbunden ist.

Die erste Steuerleitung LEU1 stellt beispielsweise eine momentane Ausgangsleistung der ersten Energieumwandlungseinrichtung EU1 der Steuereinheit SE zur Verfügung. Diese Information kann an Stelle der ersten Energieumwandlungseinrichtung EU1 auch durch einen Sensor o.ä. zur Verfügung gestellt werden.

Mittels der zweiten Steuerleitung SBS kann der Batteriespeicher BS ein- oder/und ausgeschaltet werden. Im Falle mehrerer Batterieeinheiten BE können einzelne Batterieeinheiten ein- oder/und ausgeschaltet werden.

Die Steuereinheit weist mindestens einen Eingang EN auf, über den eine Vorhersageleistung der ersten Energieumwandelungseinrichtung zuführbar ist bzw. zugeführt wird. Alternativ eine Vorhersagelastleistung oder/und Nennleistung oder/und weitere Parameter, wie Lastleistung, Lastleistungstoleranz usw.

Figur 2 zeigt eine Darstellung gemäß Figur 1, mit dem Unterschied, dass eine zweite Energieumwandlungseinrichtung EU2 vorgesehen ist. Diese wandelt beispielsweise erneuerbare oder nichterneuerbare Energie in elektrische Energie um. Wandelt die erste Energieumwandlungseinrichtung EU1 beispielsweise erneuerbare Energie in elektrische Energie um, so kann die zweite Energieumwandlungseinrichtung EU2 nichterneuerbare Energie in elektrische Energie umwandeln, oder umgekehrt.

Die zweite Energieumwandlungseinrichtung EU2 ist in analoger Weise mit einer dritten Energieleitung LEU2 mit der Verbindungseinheit verbunden und kann mit einer dritten Steuerleitung SEU2 mit der Steuereinheit verbunden sein.

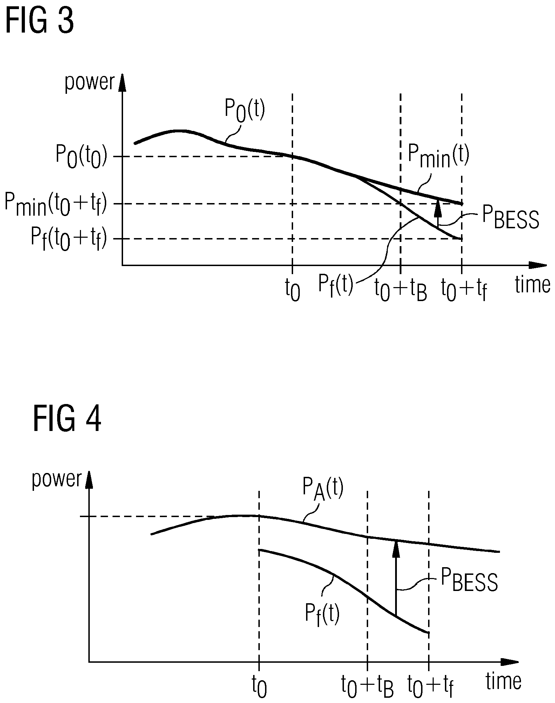

Figur 3 ein erstes Diagramm eines Leistungsverlaufs power über die Zeit time. Hier weist die Zeitachse time einen ersten Zeitpunkt to, für den momentanen Zeitpunkt; einen zweiten Zeitpunkt to+tB, der die Summe aus momentanen Zeitpunkt to und Anlaufzeit tB des Batteriespeichers/Batterieeinheit darstellt, d.h. den Zeitpunkt wo der Batteriespeicher angelaufen ist, d.h. die Batterieleistung zur Verfügung steht; einen dritten Zeitpunkt to+tf, der die Summe aus momentanen Zeitpunkt to und einer Zeitdifferenz tf ist, die den zukünftigen Zeitpunkt to+tf darstellt, wobei der zukünftige Zeitpunkt tf nach der Anlaufzeit tB ist. Dieser dritte Zeitpunkt to+tf ist der Zeitpunkt, für den eine erfindungsgemäße benötigte Leistung berechnet wird bzw. eine Prognose durchgeführt wird, um daraus resultierend genügend Leistung zur Verfügung zu stellen, bspw. durch einschalten von Batterieleistung bzw. den Energieverbrauch des Batteriespeichers zu senken, bspw. durch abschalten von Batteriespeicher bzw. Batterieeinheiten.

In Figur 3 ist ein Leistungsverlauf über der Zeit der momentanen Ausgangsleistung Po(t), beispielsweise der ersten Energieumwandlungseinheit EU1, die beispielsweise erneuerbare Energie in elektrische Energie umwandelt, bis zum ersten Zeitpunkt to dargestellt. Ab dem ersten Zeitpunkt to ist einerseits ein linearer Verlauf der Pmin(t) dargestellt, der die berechnete Ausgangsleistung darstellt, die beispielsweise durch einen Sicherheitsabschlag der momentanen Ausgangsleistung zum ersten Zeitpunkt to ermittelt werden kann, wobei der Sicherheitsabschlag beispielsweise mit zunehmender Zeit größer wird, also beispielsweise durch das Produkt eines Anstieges pro Zeiteinheit und der der Zeitdifferenz zu einem bzw. den zukünftigen Zeitpunkten, wodurch ein linear abfallender Verlauf entsteht, wie in Figur 3 dargestellt.

Ab dem ersten Zeitpunkt to ist andererseits ein weiterer Verlauf Pf(t) dargestellt, der eine Vorhersageleistung, beispielsweise der ersten Energieumwandelungseinrichtung EU1, die beispielsweise erneuerbare Energie in elektrische Energie umwandelt, über die Zeit für die Zukunft darstellt.

Aus der Differenz von berechneter Leistung Pmin(t) und Vorhersageleistung Pf(t) ergibt sich die benötigte Leistung PBESS für einen zukünftigen Zeitpunkt t. Überschreitet diese einen ersten Schwellwert, wird die mindestens eine Batterieeinheit zugeschaltet. Unterschreitet diese benötigte Leistung den gleichen bzw. einen zweiten Schwellwert, kann die mindestens eine Batterieeinheit abgeschaltet werden.

Stehen mehrere Batterieeinheiten zur Verfügung, kann eine Zuschaltung bzw. Abschaltung von Batterieeinheiten gemäß dem Verhältnis von Batterieleistung und benötigter Leistung individuell erfolgen. Es müssen nur so viele Batterieeinheiten ein bzw. zugeschaltet sein, wie Leistung benötigt wird. Analog aus- bzw. abgeschaltet sein.

Figur 4 zeigt ein zweites Diagramm gemäß Figur 3, mit dem Unterschied, dass der Leistungsverlauf eines zukünftigen Ausgangsleistungsbedarfs PA(t) über der Zeit time dargestellt ist. Weiterhin ist eine Vorhersageleistung Pf(t) über der Zeit time dargestellt. Die benötigte Leistung PBESS für einen Zeitpunkt ergibt sich aus der Differenz von Ausgangsleistungsbedarf PA(t) und Vorhersageleistung Pf(t).

Im Folgenden soll die Erfindung weiter erläutert werden.

Die Erfindung ist am besten für modulare Batteriespeicher, d.h. mit mehreren Batterieeinheiten geeignet, die beispielsweise pro Batterieeinheit einen Wechselrichter aufweisen und so unabhängig voneinander gespeist und ausgeschaltet werden können.

Der Hauptgedanke der Erfindung besteht darin, eine individuelle Anpassung von Batterieeinheiten hinsichtlich der benötigten Energie für eine Energieversorgungseinrichtung zur erzielen, um so eine optimale Anpassung und minimalen (Eigen-)Leistungsverbrauch zu erreichen.

Die Anzahl der eingeschalteten Batterieeinheiten bzw. Module basiert auf einer Prognose der benötigten Leistung. Die Vorhersagedauer, d.h. mindestens ein zukünftiger Zeitpunkt, kann durch die Startzeit der Batteriespeicher bzw. Batterieeinheiten gegeben sein und könnte mindestens der Anlaufzeit tb entsprechen bzw. größer sein.

Wenn der Batteriespeicher BS nur eine Batterieeinheit BE aufweist, dann kann der gesamte Batteriespeicher BS ausgeschaltet werden, wenn prognostiziert wird, dass für eine zukünftige Dauer keine Batterieleistung benötigt wird.

Die Erfindung basiert auf den folgenden Punkten bzw. Schritten:

1. Prognose der erneuerbaren Energie, d.h. der Vorhersageleistung der Energieumwandlungseinrichtung. Der Prognose-Zeitraum sollte gleich oder größer als die Anlaufzeit bzw. Startzeit des Batteriespeichers BS bzw. der Batterieeinheit BE sein. Die Prognose Vorhersageleistung kann beispielsweise bevorzugt auf lokalen Messungen beruhen, die eine gute kurzfristige Prognose bieten.

Ein Beispiel für eine solche Prognose für Energieumwandelungseinrichtungen basierend auf Photovoltaik-Anlagen und deren Photovoltaik-Leistung kann durch Bilder des Himmels erfolgen, wobei die Bilder beispielsweise mittels automatischer Bildverarbeitung ausgewertet werden, so der Bewölkungsgrad ermittelt werden kann und die voraussichtliche Photovoltaik-Leistung ermittelt bzw. abgeschätzt werden kann.

Eine Möglichkeit für Windkraft-Anlagen kann beispielsweise auf sogenannten LIDAR Windmessungen beruhen, mit der die Windgeschwindigkeit ermittelt werden kann.

Sind keine Vorhersagen möglich, kann eine Prognose mittels der momentan gemessenen Leistung der Energieumwandelungseinrichtung, die bspw. erneuerbare Energie in elektrische Energie umwandelt, erfolgen. Beispielsweise mit einem mit der Zeit zunehmenden Abschlag von der momentan/aktuell gemessen Leistung, wie in Figur 3 dargestellt durch die berechnete Ausgangsleistung Pmin(t).

Weiterhin können für die Vorhersageleistung Annahmen getroffen werden, über die Zukunft der verfügbaren erneuerbaren Energieleistung. Im schlimmsten Fall kann eine Annahme sein, dass die Vorhersageleistung null ist bzw. unmittelbar bzw. innerhalb einer Zeitspanne auf null einbricht.

2. Berechnung der benötigten Batteriespeicher-Leistung während der Prognose-Zeit.

Die Berechnung betrachtet die Vorhersageleistung, insbesondere bei erneuerbaren Energieumwandelungseinrichtungen, den zukünftigen Ausgangsleistungsbedarf oder/und Stabilitätsbedingungen des Energieverteilnetzes.

Beispiele für solche Berechnungen sind nachfolgend aufgeführt:

2.1 Messung der momentanen Ausgangsleistung einer Energieumwandelungseinrichtung, beispielsweise für erneuerbare Energien, und Berechnung der berechneten Ausgangsleistung der Energieumwandlungseinrichtung für mindestens einen zukünftigen Zeitpunkt. Dies kann durch einen Sicherheitsabschlag erfolgen, der zeitlich gesehen zunimmt, also die Form einer Rampe hat, wie in Figur 3 gezeigt. Die absolute zeitliche Variation soll geringer sein als ein vorgeschriebener Wert. Der Anstieg kann als maximale Abweichung pro Zeiteinheit definiert sein, beispielsweise als Prozentsatz der momentanen oder nominalen Ausgangsleistung pro Zeiteinheit, z.B. 10%/Minute.

Die maximale Leistung der Energieversorgung ist im einfachsten Fall die Summe aus (erneuerbarer) Energieerzeugung und maximaler Leistung des Batteriespeichers.

Die minimal erforderliche Batteriespeicher-Leistung ist in diesem Fall gleich der Differenz der berechneten Ausgangsleistung für den zukünftigen Zeitpunkt, gemäß der Rampenfunktion, und der Vorhersageleistung der (erneuerbaren) Energieumwandelungseinrichtung, wie in Figur 3 dargestellt.

Die berechnete bzw. minimal erforderliche Ausgangsleistung der Anlage wird berechnet als:

$$Pmin(t) = Po(to) - RR * (t-to)$$

Wobei:

RR          Anstieg pro Zeiteinheit
RR * (t-to)    Sicherheitsabschlag
Po(to)       momentane Ausgangsleistung
Pmin(t)      berechnete Ausgangsleistung

Die erforderliche Batteriespeicher-Leistung wird berechnet als:

$$PBESS(t) = Pmin(t) - Pf(t)$$

Wobei:

Pf(t)  Vorhersageleistung
PBESS(t)  benötigte Leistung

Es kann noch angenommen werden, dass:

$$\text{Wenn } Pmin(t) - Pf(t) < 0 \text{ ist, ist } PBESS(t) = 0$$

Wenn die Batteriespeicher Leistung nicht nur für einen zukünftigen Zeitpunkt, sondern für eine ganze Zeitspanne berechnet wird, kann für die Batteriespeicher-Leistung der Maximalwert aus der Zeitspanne gewählt werden.

Beispielsweise ist als Zeitspanne die Periode to und to+tB gewählt:

$$PBESS = max(PBESS(t)) \text{ für } t \text{ zwischen to und to+tB}$$

PBESS ist die minimale Leistung des Batteriespeichers, die zur Verfügung gestellt werden muss. Diese steht erst nach der Anlaufzeit zur Verfügung, weshalb diese vorab, idealerweise mindestens für die Dauer der Anlaufzeit vorab, berechnet werden sollte. Ist die Berechnung für die Dauer der Anlaufzeit durchgeführt worden, muss der Batteriespeicher zum momentanen Zeitpunkt gestartet werden. Ansonsten braucht er erst zu einem entsprechend späteren Zeitpunkt gestartet werden, so dass die Batterieleistung zum benötigten Zeitpunkt zur Verfügung steht. D.h. die Steuereinheit, die die Berechnung durchführt, ist derart ausgestaltet, dass die Einschaltung der mindestens einen Batterieeinheit um eine Offsetzeit verzögert wird, wenn der zukünftige Zeitpunkt größer als die Summe des momentanen Zeitpunktes und der Anlaufzeit ist. Die Offsetzeit ist dabei maximal die Differenz vom zukünftigen Zeitpunkt als Minuend und Summe des momentanen Zeitpunktes und der Anlaufzeit als Subtrahend. Die Offsetzeit kann dann individuell festgelegt werden. Mit dem maximalen Wert der Offsetzeit wird die maximale Energie gespart.

Sind mehrere Batterieeinheiten im Batteriespeicher enthalten, kann deren Anzahl N berechnet werden:

$$N = ceil(PBESS/PBE),$$

Wobei:

PBE  Leistung einer Batterieeinheit
Ceil  kleinste ganze Zahl, die größer oder gleich der Zahl ist, welche die Division ergibt

PBE ist die verfügbare Leistung einer Batterieeinheit, wobei zur Vereinfachung angenommen wird, dass alle Batterieeinheiten bzw. Module die gleiche Leistung haben.

Es müssen folglich N Batterieeinheiten BE eingeschaltet werden.

Die anderen Batterieeinheiten sind ausgeschaltet. Deren Energieverbrauch wird eingespart.

2.2 Leistungsplanung: Die Leistung der Anlage wird mit einer festen Zeit vorab angekündigt bzw. es existiert ein Plan, zu welcher Zeit wieviel Leistung zur Verfügung stehen soll, d.h. ein zukünftiger Ausgangsleistungsbedarf PA(t) der Energieversorgungseinrichtung bzw. Energieumwandelungseinrichtung ist gegeben.

Beispielsweise kann der zukünftige Ausgangsleistungsbedarf einen Tag vorher angekündigt sein.

Die zukünftig benötige Leistung des Batteriespeichers ist in diesem Fall die Differenz von Ausgangsleistungsbedarf und Vorhersageleistung, wie in Figur 4 dargestellt.

Die Berechnung erfolgt wie oben, wobei:

$$Pmin(t) = PA(t)$$

Wobei:

PA(t)      Ausgangsleistungsbedarf

2.3 Leistungsreserve: Die Stabilität des Netzes wird oft durch genügend Reserveleistung realisiert. Die Reserveleistung ist die Menge an Energie, die im Stand-by gehalten wird und quasi sofort verfügbar ist, wenn die Last ansteigt oder die Energieerzeugung unerwartet abnimmt.

Bei nichterneuerbarer respektive konventioneller Energieerzeugung, z.B. durch Diesel-Generatoren, wird diese Reserveleistung oft durch Batteriespeicher BS zur Verfügung gestellt.

Basierend auf der Prognose der Last, eventuell erneuerbaren Energiequellen, d.h. wenn zwei oder mehr Energieumwandelungseinrichtungen vorgesehen sind, wird die Reserveleistung bzw. Leistungsreserve berechnet.

Die benötigte Leistung bzw. minimal erforderliche Batterieleistung kann berechnet werden aus der Differenz der Reserveleistung und der Höhe der Reserve aus anderen Quellen.

$$PBESS(t) = Preserve(t) - Pkonventionell(t)$$

Wobei:

Pkonventionell(t)      Nennleistung der Energieumwandelungseinrichtung, insbesondere auf nichterneuerbarer Energien beruhende Energieumwandelungseinrichtung

Preserve(t)      Lastleistung, wobei diese mit einer Lastleistungstoleranz schwankt

Ferner kann gelten:

$$Wenn\ Preserve(t) - Pkonventionell(t) < 0\ ist\ PBESS(t)=0$$

Wobei Preserve(t) ferner auf der Grundlage der kurzfristigen Prognose der erneuerbaren Quellen und der Last berechnet werden kann.

Die Berechnung erfolgt wie oben dargestellt.

Beispiel:

Eine Last mit 100 KW Leistung, die mit +/-50 KW Lastleistungstoleranz schwankt ist an eine Energieversorgungseinrichtung angeschlossen. Die erste Energieumwandlungseinrichtung basiert beispielsweise auf nichterneuerbaren Energien und hat eine Nennleistung von 120 KW, beispielsweise ein Diesel-Generator.

Die Sollleistung der ersten Energieumwandlungseinrichtung beträgt somit 100 KW, bedingt durch die Lastleistung von 100 KW der Last. Sie hat eine Reserve von 20 KW.

$$(120\ KW - 100\ KW = 20\ KW)$$

Da die Last maximal 150 KW benötigt, ist eine Reserveleistung des Batteriespeichers von 30 KW erforderlich. Diese müssen nur zugeschaltet werden, wenn die Lastleistung 120 KW übersteigt (20 KW Reserve durch erste Energieumwandlungseinrichtung). Die Zuschaltung erfolgt gemäß Berechnung mittels der Vorhersagelastleistung.

Hat der Batteriespeicher beispielsweise 3 Batterieeinheiten a 10 KW, in Summe 30 KW; erfolgt die Zuschaltung der ersten Batterieeinheit bei einer benötigten Lastleistung von über 120 KW; von zwei Batterieeinheiten bei über 130 KW, von drei Batterieeinheiten bei über 140 KW.

Da die Leistungsreserve auch durch andere Energieumwandelungseinrichtungen erfolgen kann, sind diese entsprechend zu berücksichtigen. Ebenso kann durch das Wegschalten von Lasten in analoger Weise der Energiebedarf geregelt werden.

Batteriespeicher bzw. Batterieeinheiten die nicht benötigt werden, werden abgeschaltet und so deren Verluste gespart.

In der Steuerung wird die erläuterte Berechnung ständig wiederholt, beispielsweise entweder für einen bestimmten zukünftigen Zeitpunkt oder für eine ganz zukünftige Zeitspanne. Beispielsweise kann die Berechnung alle 3 Sekunden, 5 Sekunden, 10, Sekunden, 20 Sekunden, 30 Sekunden, ..., jede Minute etc. wiederholt werden.

Für den korrekten Betrieb und die Stabilität des Netzes muss der Energieinhalt der Batteriespeicher bzw. Batterieeinheiten überwacht werden. Ferner soll für die benötigte Zeitspanne immer genügend Energie im Batteriespeicher zur Verfügung stehen. Die Dauer, für die der Batteriespeicher Energieinhalt ausreichend sein muss, kann beispielsweise die Periode von momentanen Zeitpunkt und Anlaufzeit, d.h. to bis to+tB, sein. Ebenso die Zeitspannen von momentanen Zeitpunkt bis zukünftigen Zeitpunkt to+tf.

Normalerweise ist dies nicht der begrenzende Faktor, weil die Zeitspannen tB, tf ziemlich kurz sind.

Ähnliches gilt für die Fälle, in denen die Batteriespeicher geladen werden müssen. Dies kann beispielsweise dann erfolgen, wenn mehr Energie bzw. Leistung zur Verfügung steht, als gebraucht wird.

Der Vorteil der Erfindung liegt in der Kombination der Prognose der benötigten Leistung vom Batteriespeicher unter Berücksichtigung der Anlaufzeit des Batteriespeichers.

Damit wird sichergestellt, dass der Batteriespeicher bzw. die Batterieeinheit rechtzeitig eingeschaltet wird. Ferner wird der Eigenenergiebedarf minimiert.

Durch das Ausschalten nicht benötigter Batteriespeicher bzw. Batterieeinheiten wird die Leistungsaufnahme und Alterung reduziert.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuereinheit (SE) für eine Energieversorgungseinrichtung (EV), wobei die Energieversorgungseinrichtung (EV) aufweist:

    - einen Batteriespeicher (BS) mit mindestens einer Batterieeinheit (BE), die eine Anlaufzeit (tB) und eine Batterieleistung (PBE) aufweist,
    - eine erste Energieumwandlungseinrichtung (EU1), die nichtelektrische Energie in elektrische Energie umwandelt,
    - eine Verbindungseinheit (VE), die mit dem Batteriespeicher (BS) und der ersten Energieumwandlungseinrichtung (EU1) verbunden ist und die derart ausgestaltet ist, dass eine Summenenergie der elektrischen Energie der ersten Energieumwandlungseinrichtung (EU1) und des Batteriespeichers (BS) an ihrem Ausgang (AE) abgebbar ist,
    wobei,
    - die Steuereinheit (SE) eine momentane Ausgangsleistung (Po(to)) der ersten Energieumwandlungseinrichtung (EU1) erhält;
    - dass die Steuereinheit (SE) eine Vorhersageleistung (Pf(t)) der ersten Energieumwandlungseinrichtung (EU1) für mindestens einen zukünftigen Zeitpunkt erhält;
    - dass die Steuereinheit (SE) derart ausgestaltet ist, dass einerseits mittels der momentanen Ausgangsleistung (Po(to)) und andererseits mittels der Vorhersageleistung (Pf(t)) eine benötigte Leistung (PBESS) zum zukünftigen Zeitpunkt ermittelt wird,

    die benötigte Leistung (PBESS) mit einem ersten Schwellwert verglichen wird und bei dessen Überschreitung mindestens eine Batterieeinheit (BE) eingeschaltet wird,
    **dadurch gekennzeichnet, dass**

    - die Steuereinheit (SE) derart ausgestaltet ist, dass mittels der momentanen Ausgangsleistung (Po(to)) eine berechnete Ausgangsleistung (Pmin(t)) für den mindestens einen zukünftigen Zeitpunkt ermittelt wird, mittels der berechneten Ausgangsleistung (Pmin(t)) und der Vorhersageleistung (Pf(t)) die benötigte Leistung (PBESS) für den mindestens einen zukünftigen Zeitpunkt ermittelt wird,
    und
    - die Steuereinheit (SE) derart ausgestaltet ist,

    dass die berechnete Ausgangsleistung (Pmin(t)) die Differenz der momentanen Ausgangsleistung (Po(to)) als Minuend und eines Sicherheitsabschlages als Subtrahend ist,
wobei der Sicherheitsabschlag ein Produkt eines Anstieges pro Zeiteinheit (RR) und der Zeitdifferenz von zukünftigem und momentanem Zeitpunkt ist.

2. Steuereinheit (SE) nach Patentanspruch 1,
**dadurch gekennzeichnet,**
**dass** die Steuereinheit (SE) derart ausgestaltet ist,
**dass** die benötigte Leistung (PBESS) die Differenz von berechneter Ausgangsleistung (Pmin(t)) als Minuend und Vorhersageleistung (Pf(t)) als Subtrahend ist.

3. Steuereinheit (SE) nach einem der Patentansprüche 1 bis 2,
**dadurch gekennzeichnet,**
**dass** die erste Energieumwandlungseinrichtung (EU1) erneuerbare Energie in elektrische Energie umwandelt.

4. Steuereinheit (SE) nach Patentanspruch 1,
**dadurch gekennzeichnet,**
**dass** die erste Energieversorgungseinrichtung (EU1) mit einer Last verbindbar ist, die eine Lastleistung mit einer Lastleistungstoleranz aufweist,
die erste Energieumwandlungsrichtung (EU1) eine Nennleistung mindestens gleich oder größer als die Lastleistung aufweist, dass die Steuereinheit (SE) als Vorhersageleistung eine Vorhersagelastleistung erhält, die die Lastleistung für mindestens einen zukünftigen Zeitpunkt ist,
**dass** die Steuereinheit (SE) derart ausgestaltet ist, dass mittels der Nennleistung und der Vorhersagelastleistung die benötigte Leistung (PBESS) zum zukünftigen Zeitpunkt ermittelt wird.

5. Steuereinheit (SE) nach Patentanspruch 4,
**dadurch gekennzeichnet,**
**dass** die Steuereinheit (SE) derart ausgestaltet ist,
**dass** die benötigte Leistung (PBESS) die Differenz von Vorhersagelastleistung als Minuend und Nennleistung als Subtrahend ist.

6. Steuereinheit (SE) nach Patentanspruch 4 oder 5,
**dadurch gekennzeichnet,**
**dass** die erste Energieumwandlungseinrichtung (EU1) nichterneuerbare Energie in elektrische Energie umwandelt.

7. Steuereinheit (SE) nach Patentanspruch 6,
**dadurch gekennzeichnet,**
**dass** eine zweite Energieumwandelungseinrichtung (EU2) vorgesehen ist, die erneuerbare Energie in elektrische Energie umwandelt, mit einer Nennleistungsvarianz,
**dass** die Steuereinheit (SE) derart ausgestaltet ist, dass die benötigte Leistung (PBESS) mittels der Nennleistung, Vorhersageleistung und Nennleistungsvarianz ermittelt wird.

8. Steuereinheit (SE) nach einem der vorhergehenden Patentansprüche,
**dadurch gekennzeichnet,**
**dass** bei mehreren Batterieeinheiten (BE) des Batteriespeichers (BS) die Steuereinheit (SE) derart ausgestaltet ist,
**dass** die Anzahl einzuschaltender Batterieeinheiten (BE) durch den ganzzahlig aufgerundeten Quotienten aus benötigter Leistung (PBESS) als Dividend und Batterieleistung (PBE) der Batterieeinheit (BE) als Divisor ermittelt wird.

9. Steuereinheit (SE) nach einem der vorhergehenden Patentansprüche,
**dadurch gekennzeichnet,**
**dass** der zukünftige Zeitpunkt größer oder gleich der Summe des momentanen Zeitpunktes und der Anlaufzeit ist.

10. Steuereinheit (SE) nach Patentanspruch 9,
**dadurch gekennzeichnet,**
**dass** die Steuereinheit (SE) derart ausgestaltet ist, dass die Einschaltung der mindestens einen Batterieeinheit zum momentanen Zeitpunkt um eine Offsetzeit verzögert wird, wenn der zukünftige Zeitpunkt größer als die Summe des momentanen Zeitpunktes und der Anlaufzeit ist, wobei sich die maximale Offsetzeit insbesondere aus der Differenz von zukünftigen Zeitpunkt als Minuend und Summe aus momentanen Zeitpunkt und Anlaufzeit als Subtrahend ergibt.

**11.** Energieversorgungseinrichtung (EV) mit einer Steuereinheit (SE) nach einem der Patentansprüche 1 bis 10.

**12.** Verfahren für eine Energieversorgungseinrichtung (EV) mit:

- einem Batteriespeicher (BS) mit mindestens einer Batterieeinheit (BE), die eine Anlaufzeit (tB) und eine Batterieleistung (PBE) aufweist,
- einer erste Energieumwandlungseinrichtung (EU1), die nichtelektrische Energie in elektrische Energie umwandelt,
- einer Verbindungseinheit (VE), die mit dem Batteriespeicher (BS) und der ersten Energieumwandlungseinrichtung (EU1) verbunden ist und eine Summenenergie der elektrischen Energie der ersten Energieumwandlungseinrichtung (EU1) und des Batteriespeichers (BS) an ihrem Ausgang (AE) abgibt,

wobei
mittels einer momentanen Ausgangsleistung (Po(to) der ersten Energieumwandlungseinrichtung (EU1) und einer Vorhersageleistung (Pf(t)) der ersten Energieumwandlungseinrichtung (EU1) für mindestens einen zukünftigen Zeitpunkt eine benötigte Leistung (PBESS) für den zukünftigen Zeitpunkt ermittelt wird,
die benötigte Leistung (PBESS) mit einem ersten Schwellwert verglichen wird und bei dessen Überschreitung mindestens eine Batterieeinheit (BE) eingeschaltet wird,
**dadurch gekennzeichnet, dass**

- eine Steuereinheit (SE) die momentane Ausgangsleistung (Po(to)) der ersten Energieumwandlungseinrichtung (EU1) erhält und die Steuereinheit (SE) mittels der momentanen Ausgangsleistung (Po(to)) eine berechnete Ausgangsleistung (Pmin(t)) für den mindestens einen zukünftigen Zeitpunkt ermittelt,
mittels der berechneten Ausgangsleistung (Pmin(t)) und der Vorhersageleistung (Pf(t)) die benötigte Leistung (PBESS) für den mindestens einen zukünftigen Zeitpunkt ermittelt wird und
- die Steuereinheit (SE) die Ausgangsleistung (Pmin(t)) aus der Differenz der momentanen Ausgangsleistung (Po(to)) als Minuend und eines Sicherheitsabschlages als Subtrahend berechnet, wobei der Sicherheitsabschlag ein Produkt eines Anstieges pro Zeiteinheit (RR) und der Zeitdifferenz von zukünftigem und momentanem Zeitpunkt ist.

**Claims**

**1.** Control unit (SE) for a power supply device (EV), wherein the power supply device (EV) has:

- a battery store (BS) having at least one battery unit (BE) that has a startup time (tB) and a battery power (PBE),
- a first energy conversion device (EU1) that converts nonelectrical energy into electrical energy,
- a connecting unit (VE) that is connected to the battery store (BS) and the first energy conversion device (EU1) and that is configured such that a summed energy for the electrical energy of the first energy conversion device (EU1) and of the battery store (BS) is deliverable at its output (AE),
wherein
- the control unit (SE) receives an instantaneous output power (Po(to)) of the first energy conversion device (EU1);
- the control unit (SE) receives a predicted power (Pf(t)) of the first energy conversion device (EU1) for at least one future time;
- the control unit (SE) is configured such that firstly the instantaneous output power (Po(to)) and secondly the predicted power (Pf(t)) are used to ascertain a required power (PBESS) at the future time,

the required power (PBESS) is compared with a first threshold value and at least one battery unit (BE) is switched on if said threshold value is exceeded,
**characterized in that**

- the control unit (SE) is configured such that the instantaneous output power (Po(to)) is used to ascertain a computed output power (Pmin(t)) for the at least one future time, the computed output power (Pmin(t)) and the predicted power (Pf(t)) being used to ascertain the required power (PBESS) for the at least one future time, and
- the control unit (SE) is configured such that the computed output power (Pmin(t)) is the difference between the instantaneous output power (Po(to)) as minuend and a safety reduction as subtrahend,

the safety reduction being a product of a rise per unit time (RR) and the time difference between future time and present time.

2. Control unit (SE) according to Patent Claim 1,
   **characterized**
   **in that** the control unit (SE) is configured such that the required power (PBESS) is the difference between computed output power (Pmin(t)) as minuend and predicted power (Pf(t)) as subtrahend.

3. Control unit (SE) according to either of Patent Claims 1 and 2,
   **characterized**
   **in that** the first energy conversion device (EU1) converts renewable energy into electrical energy.

4. Control unit (SE) according to Patent Claim 1,
   **characterized**
   **in that** the first power supply device (EU1) is connectable to a load that has a load power with a load power tolerance, the first energy conversion device (EU1) has a rated power at least equal to or greater than the load power,
   **in that** the control unit (SE) receives a predicted load power, which is the load power for at least one future time, as predicted power,
   **in that** the control unit (SE) is configured such that the rated power and the predicted load power are used to ascertain the required power (PBESS) at the future time.

5. Control unit (SE) according to Patent Claim 4,
   **characterized**
   **in that** the control unit (SE) is configured such that the required power (PBESS) is the difference between predicted load power as minuend and rated power as subtrahend.

6. Control unit (SE) according to Patent Claim 4 or 5,
   **characterized**
   **in that** the first energy conversion device (EU1) converts nonrenewable energy into electrical energy.

7. Control unit (SE) according to Patent Claim 6,
   **characterized**
   **in that** a second energy conversion device (EU2) is provided that converts renewable energy into electrical energy, with a rated power variance,
   **in that** the control unit (SE) is configured such that the required power (PBESS) is ascertained by means of the rated power, predicted power and rated power variance.

8. Control unit (SE) according to one of the preceding patent claims,
   **characterized**
   **in that** when there are multiple battery units (BE) of the battery store (BS) the control unit (SE) is configured such that the number of battery units (BE) to be switched on is ascertained using the quotient, rounded up to an integer, of required power (PBESS) as dividend and battery power (PBE) of the battery unit (BE) as divisor.

9. Control unit (SE) according to one of the preceding patent claims,
   **characterized**
   **in that** the future time is greater than or equal to the sum of the present time and the startup time.

10. Control unit (SE) according to Patent Claim 9,
    **characterized**
    **in that** the control unit (SE) is configured such that switching on the at least one battery unit at the present time is delayed by an offset time if the future time is greater than the sum of the present time and the startup time, the maximum offset time being obtained particularly from the difference between future time as minuend and sum of present time and startup time as subtrahend.

11. Power supply device (EV) having a control unit (SE) according to one of Patent Claims 1 to 10.

12. Method for a power supply device (EV) having:

- a battery store (BS) having at least one battery unit (BE) that has a startup time (tB) and a battery power (PBE),
- a first energy conversion device (EU1) that converts nonelectrical energy into electrical energy,
- a connecting unit (VE) that is connected to the battery store (BS) and the first energy conversion device (EU1) and delivers a summed energy for the electrical energy of the first energy conversion device (EU1) and of the battery store (BS) at its output (AE),

wherein

an instantaneous output power (Po(to)) of the first energy conversion device (EU1) and a predicted power (Pf(t)) of the first energy conversion device (EU1) for at least one future time are used to ascertain a required power (PBESS) for the future time,

the required power (PBESS) is compared with a first threshold value and at least one battery unit (BE) is switched on if said threshold value is exceeded,

**characterized in that**

- a control unit (SE) receives the instantaneous output power (Po(to)) of the first energy conversion device (EU1) and the control unit (SE) ascertains a computed output power (Pmin(t)) for the at least one future time using the instantaneous output power (Po(to)),

the computed output power (Pmin(t)) and the predicted power (Pf(t)) being used to ascertain the required power (PBESS) for the at least one future time, and

- the control unit (SE) computes the output power (Pmin(t)) from the difference between the instantaneous output power (Po(to)) as minuend and a safety reduction as subtrahend, the safety reduction being a product of a rise per unit time (RR) and the time difference between future time and present time.

## Revendications

1. Unité de commande (SE) destinée à un dispositif d'alimentation en énergie (EV), dans laquelle le dispositif d'alimentation en énergie (EV) présente :

   - un accumulateur de batterie (BS) avec au moins une unité de batterie (BE), qui présente un temps de réponse (tB) et une puissance de batterie (PBE),
   - un premier dispositif de conversion d'énergie (EU1), qui convertit de l'énergie non électrique en énergie électrique,
   - une unité de liaison (VE) qui est reliée à l'accumulateur de batterie (BS) et au premier dispositif de conversion d'énergie (EU1) et qui est conçue de telle manière qu'une énergie cumulative de l'énergie électrique du premier dispositif de conversion d'énergie (EU1) et de l'accumulateur de batterie (BS) peut être distribuée au niveau de sa sortie (AE),

   dans laquelle,

   - l'unité de commande (SE) obtient une puissance de sortie instantanée (Po(to)) du premier dispositif de conversion d'énergie (EU1) ;
   - l'unité de commande (SE) obtient une puissance prévisible (Pf(t)) du premier dispositif de conversion d'énergie (EU1) pour au moins un moment futur ;
   - l'unité de commande (SE) est conçue de telle manière qu'une puissance requise (PBESS) pour le moment futur est déterminée au moyen de la puissance de sortie instantanée (Po(to)) d'une part et au moyen de la puissance prévisible (Pf(t)) d'autre part,

   la puissance requise (PBESS) est comparée à une première valeur de seuil et au moins une unité de batterie (BE) est commutée en cas de dépassement de celle-ci,
   **caractérisée en ce que**

   - l'unité de commande (SE) est conçue de telle manière qu'une puissance de sortie calculée (Pmin(t)) pour le au moins un moment futur est déterminée au moyen de la puissance de sortie instantanée (Po(to)),

   la puissance requise (PBESS) pour le au moins un moment futur est déterminée au moyen de la puissance de sortie calculée (Pmin(t)) et de la puissance prévisible (Pf(t)),
   et

- l'unité de commande (SE) est conçue de telle manière que la puissance de sortie calculée (Pmin(t)) correspond à la différence entre la puissance de sortie instantanée (Po(to)) en tant que diminuende et une marge de sécurité en tant que diminuteur,

dans laquelle la marge de sécurité est un produit d'une augmentation par unité de temps (RR) multipliée par la différence de temps entre le moment futur et le moment instantané.

2. Unité de commande (SE) selon la revendication 1,
**caractérisée en ce que**
l'unité de commande (SE) est conçue de telle manière que la puissance requise (PBESS) correspond à la différence entre la puissance de sortie calculée (Pmin(t)) en tant que diminuende et la puissance prévisible (Pf(t)) en tant que diminuteur.

3. Unité de commande (SE) selon l'une quelconque des revendications 1 à 2,
**caractérisée en ce que**
le premier dispositif de conversion d'énergie (EU1) convertit de l'énergie renouvelable en énergie électrique.

4. Unité de commande (SE) selon la revendication 1,
**caractérisée en ce que**
le premier dispositif de conversion d'énergie (EU1) peut être relié à une charge qui présente une puissance de charge associée à une tolérance de puissance de charge,
le premier dispositif de conversion d'énergie (EU1) présente une puissance nominale au moins supérieure ou égale à la puissance de charge,
en tant que puissance prévisible, l'unité de commande (SE) obtient une puissance de charge prévisible qui correspond à la puissance de charge pour au moins un moment futur,
l'unité de commande (SE) est conçue de telle manière que la puissance requise (PBESS) pour le moment futur est déterminée au moyen de la puissance nominale et de la puissance de charge prévisible.

5. Unité de commande (SE) selon la revendication 4,
**caractérisée en ce que**
l'unité de commande (SE) est conçue de telle manière que la puissance requise (PBESS) correspond à la différence entre la puissance de charge prévisible en tant que diminuende et la puissance nominale en tant que diminuteur.

6. Unité de commande (SE) selon la revendication 4 ou 5,
**caractérisée en ce que**
le premier dispositif de conversion d'énergie (EU1) convertit de l'énergie non renouvelable en énergie électrique.

7. Unité de commande (SE) selon la revendication 6,
**caractérisée en ce que**
un deuxième dispositif de conversion d'énergie (EU2) qui convertit de l'énergie renouvelable en énergie électrique est prévu, avec une variance de puissance nominale,
l'unité de commande (SE) est conçue de telle manière que la puissance requise (PBESS) est déterminée au moyen de la puissance nominale, de la puissance prévisible et de la variance de puissance nominale.

8. Unité de commande (SE) selon l'une quelconque des revendications précédentes,
**caractérisée en ce que**
lorsque l'accumulateur de batterie (BS) comprend plusieurs unités de batterie (BE), l'unité de commande (SE) est conçue de telle manière que
le nombre d'unités de batterie (BE) à commuter est déterminé grâce aux quotients calculés à partir de la puissance requise (PBESS) en tant que dividende et de la puissance de batterie (PBE) de l'unité de batterie (BE) en tant que diviseur et arrondis au nombre entier le plus proche.

9. Unité de commande (SE) selon l'une quelconque des revendications précédentes,
**caractérisée en ce que**
le moment futur est supérieur ou égal à la somme du moment instantané et du temps de réponse.

10. Unité de commande (SE) selon la revendication 9,
**caractérisée en ce que**

l'unité de commande (SE) est conçue de telle manière que la commutation de la au moins une unité de batterie au moment instantané est retardée d'un temps de décalage lorsque le moment futur est supérieur à la somme du moment instantané et du temps de réponse, dans lequel le temps de décalage maximal est en particulier issu de la différence entre le moment futur en tant que diminuende et la somme du moment instantané et du temps de réponse en tant que diminuteur.

**11.** Dispositif d'alimentation en énergie (EV) comprenant une unité de commande (SE) selon l'une quelconque des revendications 1 à 10.

**12.** Procédé pour un dispositif d'alimentation en énergie (EV), comprenant :

- un accumulateur de batterie (BS) avec au moins une unité de batterie (BE), qui présente un temps de réponse (tB) et une puissance de batterie (PBE),
- un premier dispositif de conversion d'énergie (EU1) qui convertit de l'énergie non électrique en énergie électrique,
- une unité de liaison (VE) qui est reliée à l'accumulateur de batterie (BS) et au premier dispositif de conversion d'énergie (EU1) et qui distribue au niveau de sa sortie (AE) une énergie cumulative de l'énergie électrique du premier dispositif de conversion d'énergie (EU1) et de l'accumulateur de batterie (BS),

dans lequel
une puissance requise (PBESS) pour le moment futur est déterminée au moyen d'une puissance de sortie instantanée (Po(to)) du premier dispositif de conversion d'énergie (EU1) et d'une puissance prévisible (Pf(t)) du premier dispositif de conversion d'énergie (EU1) pour au moins un moment futur,
la puissance requise (PBESS) est comparée à une première valeur de seuil et au moins une unité de batterie (BE) est commutée en cas de dépassement de celle-ci,
**caractérisé en ce que**

- une unité de commande (SE) obtient la puissance de sortie instantanée (Po(to)) du premier dispositif de conversion d'énergie (EU1) et l'unité de commande (SE) détermine une puissance de sortie calculée (Pmin(t)) pour le au moins un moment futur au moyen de la puissance de sortie instantanée (Po(to)),

la puissance requise (PBESS) pour le au moins un moment futur est déterminée au moyen de la puissance de sortie calculée (Pmin(t)) et de la puissance prévisible (Pf(t)) et

- l'unité de commande (SE) calcule la puissance de sortie (Pmin(t)) à partir de la différence entre la puissance de sortie instantanée (Po(to)) en tant que diminuende et une marge de sécurité en tant que diminuteur, dans lequel la marge de sécurité est un produit d'une augmentation par unité de temps (RR) multipliée par la différence de temps entre le moment futur et le moment instantané.

# FIG 1

# FIG 2

FIG 3

power

$P_0(t)$

$P_0(t_0)$

$P_{min}(t)$

$P_{min}(t_0+t_f)$

$P_f(t_0+t_f)$

$P_{BESS}$

$P_f(t)$

$t_0$   $t_0+t_B$   $t_0+t_f$   time

FIG 4

power

$P_A(t)$

$P_{BESS}$

$P_f(t)$

$t_0$   $t_0+t_B$   $t_0+t_f$   time

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015139061 A1
- EP 1511109 A2